# EUROPÄISCHE PATENTSCHRIFT

(11) **EP 2 125 465 B1**
(45) Veröffentlichungstag und Bekanntmachung des Hinweises auf die Patenterteilung: **08.08.2012**
(21) Anmeldenummer: 08701353.8
(22) Anmeldetag: 09.01.2008
(51) Int. Cl.: B60T 8/36

(54) **FLUIDAGGREGAT**
FLUID ASSEMBLY
ORGANE FLUIDIQUE

(30) Priorität: 26.02.2007 DE 102007009162
(43) Veröffentlichungstag der Anmeldung: 02.12.2009
(73) Patentinhaber: Robert Bosch GmbH, 70442 Stuttgart (DE)
(72) Erfinder: FUERST, Rainer, 87509 Immenstadt (DE); BAREISS, Alexander, 87509 Immenstadt (DE)
(86) Internationale Anmeldenummer: PCT/EP2008/050189
(87) Internationale Veröffentlichungsnummer: WO 2008/104412

(56) Entgegenhaltungen:
- WO-A-00/63053
- DE-A1- 10 109 473
- DE-A1- 19 813 184
- DE-A1- 19 833 498
- JP-A- 7 052 776

## Beschreibung

### Stand der Technik

Die Erfindung betrifft ein Fluidaggregat nach der Gattung des unabhängigen Patentanspruchs 1.

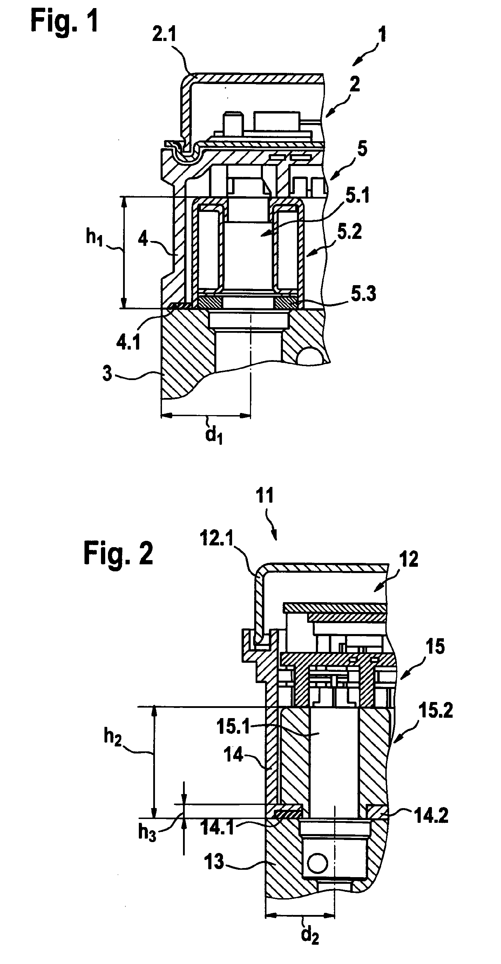

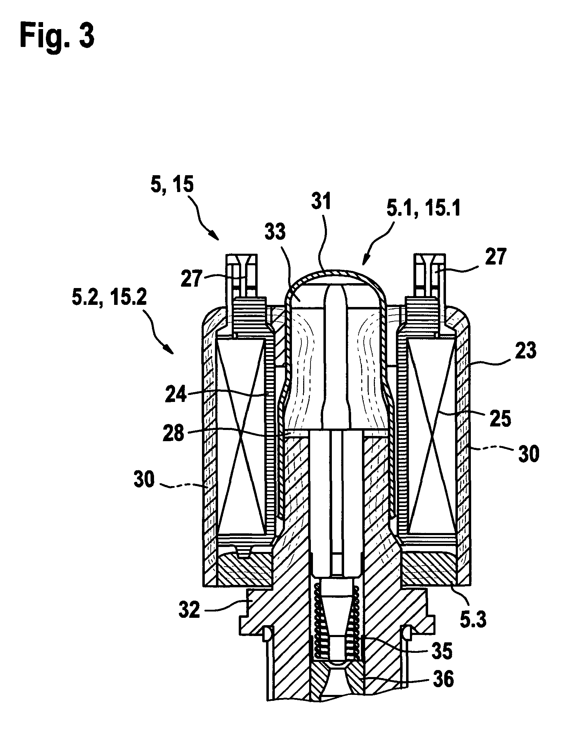

Herkömmliche Fluidaggregate, die beispielsweise in einem Antiblockiersystem (ABS) oder einem Antriebsschlupfregelsystem (ASR-System) oder einem elektronischen Stabilitätsprogrammsystem (ESP-System) eingesetzt wird, sind in Fig. 1 und 2 dargestellt, wobei Fig. 1 eine schematische Schnittdarstellung eines Bereichs eines Fluidaggregats in einer Haubenbauform zeigt, und Fig. 2 eine schematische Schnittdarstellung eines Bereichs eines Fluidaggregats in einer Wannenbauform zeigt. Fig. 3 zeigt ein Ausführungsbeispiel eines herkömmlichen Magnetventils 5, 15, das zur Regelung des Fluidstroms in den Fluidaggregaten 1, 11 gemäß Fig. 1 bzw. Fig. 2 verwendet werden kann. Wie aus Fig. 3 ersichtlich ist, umfasst das dargestellte herkömmliche Magnetventil 5, 15 eine Ventilpatrone 5.1, 15.1, die eine Kapsel 31, einen Ventileinsatz 32, einen Anker 33, eine Rückstellfeder 35 und einen Ventilkörper 36 umfasst, und eine Magnetbaugruppe 5.2, 15.2, die einen Gehäusemantel 23, einen Wicklungsträger 24, eine Spulenwicklung 25, elektrische Anschlüsse 27 und eine eingepresste Abdeckscheibe 5.3 umfasst. Ein von der Spulenwicklung erzeugter Magnetfluss 30 wird über den Gehäusemantel 23, die Abdeckscheibe 5.3, den Ventileinsatz 32, und den Anker 33 geleitet, wobei der Anker 33 durch die erzeugte Magnetkraft gegen die Kraft der Rückstellfeder 35 in Richtung Ventileinsatz 32 bewegt wird, wodurch ein Luftspalt 28 zwischen dem Anker 33 und dem Ventileinsatz 32 verkleinert wird. Zur Anpassung an verschiedene Durchmesser der Ventilpatrone 5.1, 15.1 können zur Vermeidung eines zu großen radialen Nebenluftspaltes jeweils Abdeckscheiben 5.3 mit angepassten Bohrungsdurchmessern in sonst baugleiche Magnetbaugruppen 5.2, 15.2 eingepresst werden, was mit einer erhöhten Variantenvielfalt mit Auswirkungen auf Logistik, Montage und Kosten verbunden ist.

Bei einer alternativen Bauform der Magnetbaugruppe 5.2, 15.2 kann der Magnetkreis 30 axial getrennt sein, so dass erst beim Fügen des Steuergerätes der Gehäusemantel 23 mit dem Wicklungsträger 24 und der Spulenwicklung 25 auf die mit der Ventilpatrone 5.1, 15.1 fest verbundene Abdeckscheibe 5.3 aufgesteckt werden und damit der Magnetkreis 30 geschlossen wird, wobei die Befestigung der Ventilpatrone viel Platz in Anspruch nimmt.

Wie aus Fig. 1 und 2 ersichtlich ist, wird auf einem Fluidblock 3, 13 mit Ventilpatronen, von denen jeweils eine Ventilpatrone 5.1, 15.1 dargestellt ist, ein Steuergerät 2, 12 befestigt, das einen Deckel 2.1, 12.1, eine Gehäusewand 4, 14 und eine korrespondierende Magnetbaugruppe 5.2 15.2 umfasst, wobei die Höhe der Gehäusewand 4, 14 im Wesentlichen von der Höhe h1, h2 der jeweiligen Magnetbaugruppe 5.2, 15.2 bestimmt wird.

Bei der in Fig. 1 dargestellten Haubenbauform liegt die Magnetbaugruppe 5.2 mit der Abdeckscheibe 5.3 direkt auf der Oberfläche des Fluidblocks 3 auf. Hierbei liegt eine Dichtung 4.1 zur Abdichtung zwischen dem Steuergerät 2 und dem Fluidblock 3 neben dem Gehäusemantel 23 der Magnetbaugruppe 5.2 auf. Der Abstand d1 der Längsachse des Magnetventils 5 zum Rand des Fluidblocks 3 sowie die entsprechenden Abmessungen des Steuergerätes 2 und damit der Bauraum des Gesamtsystems wird durch den Radius der Magnetbaugruppe 5.2 und die Breite der Dichtung 4.1 bestimmt.

Bei der in Fig. 2 dargestellten Wannenbauform befindet sich die Dichtung 14.1 auf der Unterseite eines zwischen der Magnetbaugruppe 15.2 und dem Fluidblock 13 aufgesetzten Wannenboden 14.2. Dadurch wird der Abstand d2 der Längsachse des Magnetventils 15 zum Rand des Fluidblocks 13 sowie die entsprechenden Abmessungen des Steuergerätes 12 und damit der Bauraum des Gesamtsystems nur noch durch den Radius der Magnetbaugruppe 15.2 und die Stärke der Gehäusewand 14 bestimmt. Durch das Zwischenschieben des Wannenbodens 14.2 erhöht sich jedoch die Lage der Magnetbaugruppe 15.2 bezogen auf die Ventilpatrone 15.1, so dass zur Sicherstellung eines gleichen Magnetflusses die Ventilpatrone 15.1 in der Höhe um die Dicke h3 des Wannenbodens 14.2 zunimmt. Somit weist die Wannenbauform gemäß Fig. 2 zwar einen kleineren Abstand d2 zwischen der Längsachse des Magnetventils 15 und dem Rand der Fluidbaugruppe 13 als die Haubenbauform gemäß Fig. 1 mit dem Abstand d1 zwischen der Längsachse des Magnetventils 5 und dem Rand der Fluidbaugruppe 3 auf, dafür ist die Höhe h2 der Magnetbaugruppe 15.2 jedoch höher als die Höhe h 1 der Magnetbaugruppe 5.2.

In den Dokumenten DE-A-198 33 498 und DE-A-198 13 184 wird beispielsweise jeweils ein Fluidaggregat beschrieben. Das beschriebene Fluidaggregat umfasst jeweils einen Fluidblock, ein Steuergerät und mindestens ein Magnetventil, das eine im Fluidblock angeordnete Ventilpatrone und eine korrespondierende im Steuergerät angeordnete Magnetbaugruppe umfasst, wobei das Steuergerät über eine Gehäusewanne dichtend mit dem Fluidblock verbunden ist.

Im Dokument JP-A-07 052776 wird ebenfalls ein Fluidaggregat beschrieben. Das beschriebene Fluidaggregat umfasst einen Fluidblock, ein Steuergerät und mindestens ein Magnetventil, das eine im Fluidblock angeordnete Ventilpatrone und eine korrespondierende im Steuergerät angeordnete Magnetbaugruppe umfasst, wobei das Steuergerät über eine Gehäusewanne dichtend mit dem Fluidblock verbunden ist, und wobei die Gehäusewanne einen funktionsintegrierten Gehäuseboden aufweist, der in einen Magnetkreis des mindestens einen Magnetventils eingebunden ist und wenigstens im Durchsteckbereich des mindestens einen Magnetventils aus einem magnetisch leitfähigen Material, vorzugsweise einem Metall, gebildet ist.

### Offenbarung der Erfindung

Das erfindungsgemäße Fluidaggregat mit den Merkmalen des unabhängigen Patentanspruchs 1 hat demgegenüber den Vorteil, dass eine Gehäusewanne, über die ein Steuergerät dichtend mit einem Fluidblock verbunden ist, einen funktionsintegrierten Gehäuseboden aufweist, der in einen Magnetkreis mindestens eines Magnetventils eingebunden ist und wenigstens im Durchsteckbereich des mindestens einen Magnetventils aus einem magnetisch leitfähigen Material, vorzugsweise einem Metall, gebildet ist. Die erfindungsgemäße Gehäusewanne übernimmt in vorteilhafter Weise die Funktion der Abdeckscheibe des herkömmlichen Magnetventils, so dass die Gesamtbauhöhe und die Gesamtbaubreite reduziert werden können und die Abdeckscheiben als Teil des Magnetkreises entfallen können. Gleichzeitig bleibt die optimale Befestigungsmöglichkeit der Ventilpatronen bestehen und die Schnittstelle zwischen Fluidblock und Steuergerät ist gut abgedichtet. Zudem erhöht der funktionsintegrierte Gehäuseboden in vorteilhafter die Steifigkeit des Steuergerätegehäuses und kann Bohrungen zur Montage des Steuergerätes auf den Fluidblock zur Verfügung stellen.

Zur Erhöhung des magnetischen Übergangs zwischen der Magnetbaugruppe und der Ventilpatrone weist der funktionsintegrierte Gehäuseboden erfindungsgemäß im Durchsteckbereich des mindestens einen Magnetventils nach oben und/oder unten weisende Auskragungen auf.

Durch die in den abhängigen Ansprüchen aufgeführten Maßnahmen und Weiterbildungen sind vorteilhafte Verbesserungen des im unabhängigen Patentanspruch 1 angegebenen Fluidaggregats möglich.

Besonders vorteilhaft ist, dass der gesamte Gehäuseboden und/oder die gesamte Gehäusewanne aus dem magnetisch leitenden Material, vorzugsweise einem Metall, aufgebaut ist, wodurch die Steifigkeit und die Befestigungsmöglichkeiten des Steuergerätegehäuses, insbesondere bei der Ausführung als Metallboden, weiter verbessert werden können. Zudem können zwischen der Magnetbaugruppe und einer Abdeckung elastische Elemente angeordnet werden, welche die Magnetbaugruppe dauerhaft gegen den Gehäuseboden drücken. Dadurch kann in vorteilhafter Weise ein ungewollter axialer Luftspalt, der den Magnetfluss und damit die erzeugte Magnetkraft abschwächt, zwischen dem Gehäuseboden und der Magnetbaugruppe vermieden werden.

In Ausgestaltung des erfindungsgemäßen Fluidaggregats ist die Gehäusewanne durch Schrauben und/oder Kleben und/oder Nieten mit dem Fluidblock verbunden. Um eine hohe Vorspannung zu erlauben, ist der Gehäuseboden im Bereich einer Befestigungsbohrung für eine Schraub- und/oder Nietverbindung aus Metall gefertigt. Bei einer Schraub- oder Nietverbindung entsteht mit der Schraube bzw. Niet, dem Metallboden und dem Fluidblock ein durchgehender metallischer Schraub- bzw. Nietverband, der eine hohe Vorspannung erlaubt und keinen Relaxationserscheinungen des Kunststoffs unterliegt, wobei im Vergleich zu einer vollständigen Kunststoffwanne hier auf eine zusätzliche Schraubbuchse verzichtet werden kann.

In weiterer Ausgestaltung des erfindungsgemäßen Fluidaggregats ist der aus Metall gefertigte Gehäuseboden im Randbereich mit Kunststoff umspritzt, wobei eine Dichtnut im Bereich der Kunststoffumspritzung ausgeformt ist, so dass das bauraumneutrale Aufbringen einer Klebe- bzw. Dichtschicht ermöglicht wird, welche die Grenzschichten des Fluidblocks und des Metallgehäusebodens von der Atmosphäre trennt und somit Korrosionserscheinungen vorbeugt. Zudem kann der Gehäuseboden im Randbereich beispielsweise durch Abprägen in der Dicke reduziert werden, um die Dichtung aufzunehmen. Alternativ erlaubt ein Hochbiegen des Gehäusebodens im Randbereich die bauraumneutrale Unterbringung der umlaufenden Dichtung. Des Weiteren kann eine flächige Dichtung über die gesamte Fläche des Gehäusebodens angeordnet werden. Eine Trennebene zwischen dem Fluidblock und dem Steuergerät kann beispielsweise zwischen dem Fluidblock und der Gehäusewanne oder zwischen der Gehäusewanne und dem Steuergerät verlaufen.

In weiterer Ausgestaltung des erfindungsgemäßen Fluidaggregats kann der Gehäuseboden an mindestens einer vorgegebenen Stelle eine hochgebogene Kühllasche aufweisen, um einen thermisch leitenden Pfad für ein elektronisches Bauelement auszubilden, so dass im elektronischen Bauelement entstehende Wärme in vorteilhafter Weise über die Kühllasche und den Gehäuseboden zum Fluidblock abgeleitet werden kann.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines Bereichs eines Fluidaggregats in einer Haubenbauform.
Fig. 2 zeigt eine schematische Schnittdarstellung eines Bereichs eines Fluidaggregats in einer Wannenbauform.
Fig. 3 zeigt eine schematische Schnittdarstellung eines Magnetventils für das Fluidaggregat gemäß Fig. 1 bzw. Fig. 2.
Fig. 4 zeigte eine schematische Schnittdarstellung einer Gehäusewanne.
Fig. 5 zeigt eine schematische Schnittdarstellung eines Bereichs eines erfindungsgemäßen Fluidaggregats mit der Gehäusewanne gemäß Fig. 4.
Fig. 6 zeigt eine schematische Schnittdarstellung eines anderen Bereichs eines erfindungsgemäßen Fluidaggregats mit der Gehäusewanne gemäß Fig. 4.
Fig. 7 zeigt eine Detaildarstellung aus Fig. 6.
Fig. 8 zeigt eine schematische Schnittdarstellung eines Bereichs eines erfindungsgemäßen Fluidaggregats mit der Gehäusewanne gemäß Fig. 4.
Fig. 9 zeigt eine Detaildarstellung aus Fig. 8.
Fig. 10 zeigt eine perspektivische Darstellung einer Ausführungsform einer Gehäusewanne.
Fig. 11 zeigt eine Draufsicht der Gehäusewanne gemäß Fig. 10.
Fig. 12 zeigt eine geschnittene Seitenansicht der Gehäusewanne entlang der Schnittlinie XII-XII aus Fig. 11.
Fig. 13 zeigt eine Draufsicht einer weiteren Ausführungsform einer Gehäusewanne.
Fig. 14 zeigt eine geschnittene Seitenansicht der Gehäusewanne entlang der Schnittlinie XIV-XIV aus Fig. 13.
Fig. 15 zeigt eine geschnittene Vorderansicht der Gehäusewanne entlang der Schnittlinie XV-XV aus Fig. 13.
Fig. 16 zeigt eine perspektivische Darstellung von wesentlichen Komponenten eines Fluidaggregats mit einer ersten Trennebene.
Fig. 17 zeigt eine perspektivische Darstellung von wesentlichen Komponenten eines Fluidaggregats mit einer zweiten Trennebene.

### Ausführungsformen der Erfindung

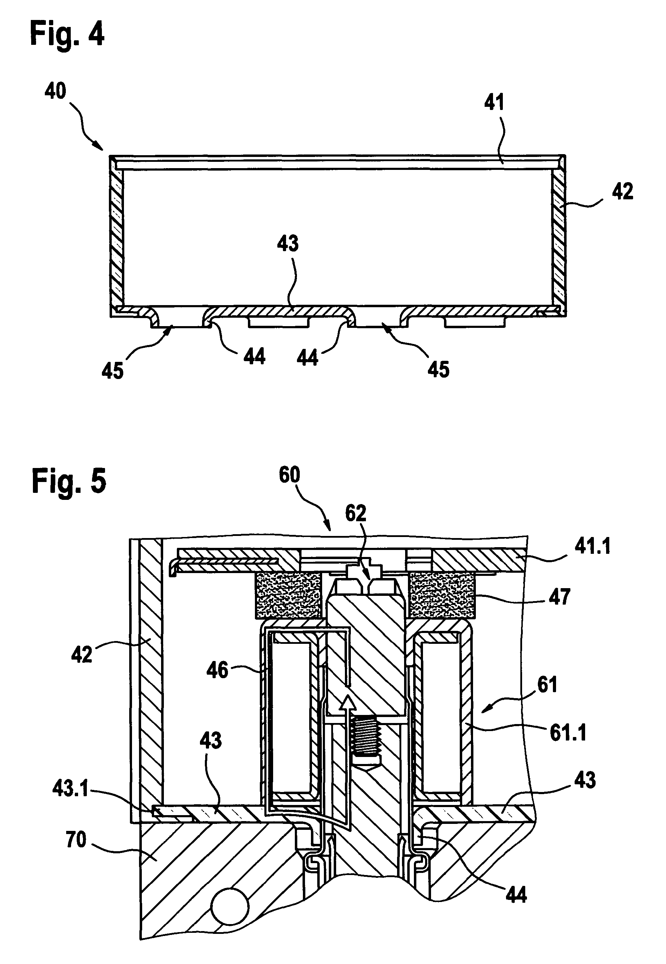

Wie aus Fig. 4 ersichtlich ist, weist eine Gehäusewanne 40 für ein erfindungsgemäßes Fluidaggregat 80 zur dichtenden Verbindung eines Steuergeräts 50 mit einem Fluidblock 70 einen Gehäuserahmen 42 aus Kunststoff, einen Gehäusedeckel 41 und einen funktionsintegrierten Gehäuseboden 43 auf, der aus einem magnetisch leitfähigen Material gefertigt ist. Im dargestellten Ausführungsbeispiel ist der Gehäuseboden 43 als Metallplatte ausgeführt. Wie weiter aus Fig. 4 ersichtlich ist, weist der funktionsintegrierte Gehäuseboden 43 jeweils an Durchsteckbereichen 45 für Magnetventile 60 nach unten weisende Auskragungen 44 auf, welche die Länge eines magnetischen Übergangs zwischen einer Magnetbaugruppe 61 und einer Ventilpatrone 62 des zugehörigen Magnetventils 60 erhöhen. Alternativ können die Auskragungen im Gehäuseboden 43 auch nach oben weisen.

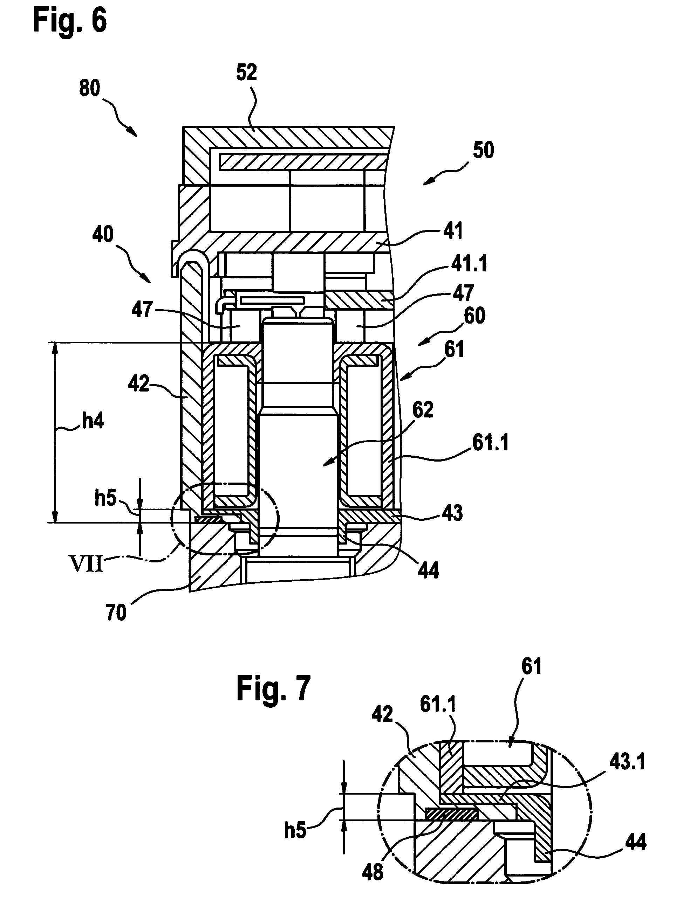

Fig. 5 zeigt eine schematische Schnittdarstellung eines Bereichs eines erfindungsgemäßen Fluidaggregats 80 mit der Gehäusewanne 40 gemäß Fig. 4. Wie aus Fig. 5 ersichtlich ist, wird die Magnetbaugruppe 61 über den Gehäusemantel 61.1 durch komprimierbare elastische Elemente 47, die zwischen einer Abdeckung 41.1 und der Magnetbaugruppe 61 angeordnet sind, dauerhaft gegen den Gehäuseboden 43 gedrückt, wodurch der Magnetkreis 46 in vorteilhafter Weise ohne axiale Luftspalte zwischen dem Gehäusemantel 61.1 und dem Gehäuseboden 43 aufgebaut werden kann. Wie weiter aus Fig. 5 ersichtlich ist, ist die Gehäusewanne 40 mit dem Durchsteckbereich 45 im Gehäuseboden 43 auf die Ventilpatrone 62 des Magnetventils 60 aufgesteckt, wobei die Ventilpatrone 62 an der Auskragung 44 im Durchsteckbereich 45 des Gehäusebodens anliegt. Durch Umspritzen des als Metallplatte ausführten Gehäusebodens 43 im Randbereich 43.1 kann im Kunststoff eine Dichtnut ausgeformt werden, siehe Fig. 6 bis 9, die ein bauraumneutrales Aufbringen einer Klebe- bzw. Dichtschicht ermöglicht, welche die Grenzschichten des Fluidblocks 70 und des als Metallplatte ausgeführten Gehäusebodens 43 von der Atmosphäre trennt und somit Korrosionserscheinungen vorbeugt. Zudem kann der als Metallplatte ausgeführte Gehäuseboden 43 im Randbereich 43.1 beispielsweise durch Abprägen in der Dicke reduziert werden. Alternativ erlaubt beispielsweise ein Hochbiegen im Randbereich 43.1 des als Metallplatte ausgeführten Gehäusebodens 43 die bauraumneutrale Unterbringung einer umlaufenden Dichtung. Zudem kann eine flächige Dichtung über die gesamte Fläche des Gehäusebodens 43 verwendet werden.

Fig. 6 zeigt eine schematische Schnittdarstellung eines anderen Bereichs eines erfindungsgemäßen Fluidaggregats mit der Gehäusewanne gemäß Fig. 4, und Fig. 7 zeigt eine Detaildarstellung aus Fig. 6. Wie aus Fig. 6 und 7 ersichtlich ist, wird die Magnetbaugruppe 61 analog zu Fig. 5 über den Gehäusemantel 61.1 durch die komprimierten elastischen Elemente 47 dauerhaft gegen den Gehäuseboden 43 gedrückt. Die Gehäusewanne 40 ist mit dem Durchsteckbereich 45 im Gehäuseboden 43 auf die Ventilpatrone 62 des Magnetventils 60 aufgesteckt, wobei die Ventilpatrone 62 an der Auskragung 44 im Durchsteckbereich 45 des Gehäusebodens anliegt. Im Kunststoff des umspritzten Randbereichs 43.1 des als Metallplatte ausführten Gehäusebodens 43 ist eine Dichtnut ausgeformt, in der eine Dichtung 48 angeordnet ist. Zudem ist der als Metallplatte ausgeführte Gehäuseboden 43 im Randbereich 43.1 durch Abprägen in der Dicke reduziert. Wie weiter aus Fig. 5 und 6 ersichtlich ist, ist der funktionsintegrierte Gehäuseboden 43 in den Magnetkreis 46 des Magnetventils 60 eingebunden, wobei der Gehäuseboden 43 die Funktion der Abdeckscheibe 5.3 des herkömmlichen Magnetventils 5, 15 aus Fig. 3 übernimmt, so dass die Gesamtbauhöhe und die Gesamtbaubreite des Fluidaggregats reduziert werden können und die Abdeckscheibe als Teil des Magnetkreises entfallen kann. Das bedeutet, dass die Höhe h4 der Magnetbaugruppe 62 trotz des zusätzlichen Gehäusebodens 43 niedriger als die Höhe h1 der Magnetbaugruppe 5.2 aus Fig. 1 und niedriger als die Höhe h2 der Magnetbaugruppe 15.2 aus Fig. 2 ist. Zudem ist Abstand d3 der Längsachse des Magnetventils 60 zum Rand des Fluidblocks 70 kleiner als der Abstand d1 der Längsachse des Magnetventils 5 aus Fig. 1 zum Rand des Fluidblocks 3 und kleiner als der Abstand d2 der Längsachse des Magnetventils 15 aus Fig. 2 zum Rand des Fluidblocks 13.

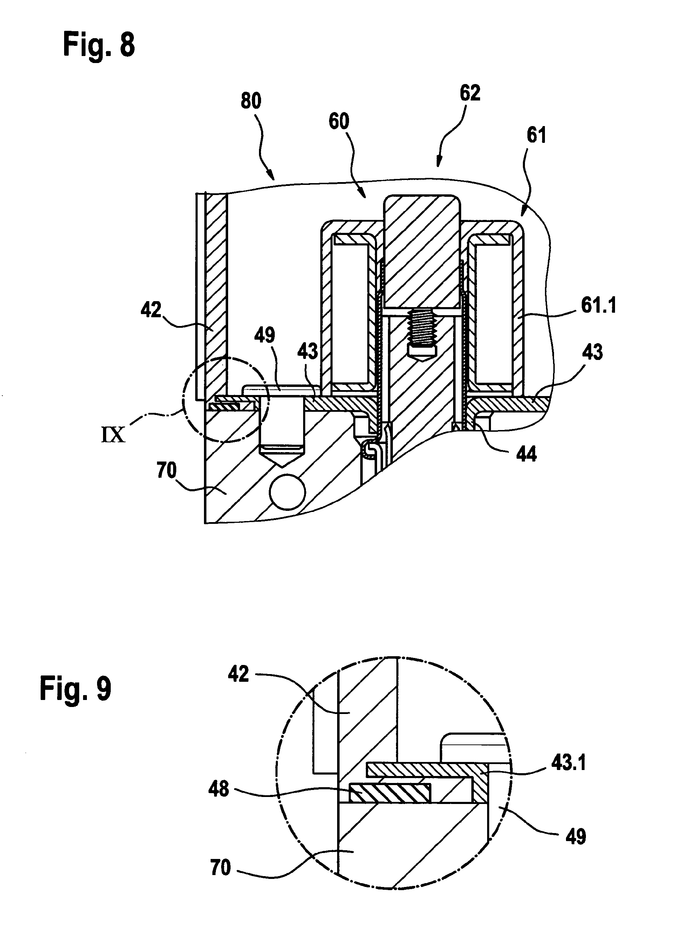

Die Befestigung der Gehäusewanne 40 auf dem Fluidblock 70 kann beispielsweise durch Kleben, Schrauben, Nieten usw. aus beliebiger Richtung erfolgen. Wie aus Fig. 8 und 9 ersichtlich ist, kann beispielsweise ein Befestigungselement 49 innerhalb der Gehäusewanne 40 in Richtung Fluidblock 70 eingebracht werden. Zusätzlich oder alternativ kann eine Schraube von der Rückseite des Fluidblocks 70 durch diesen hindurch in ein Gewinde eingeschraubt werden, das im Gehäuseboden 43 eingebracht ist. Bei einer Schraub- bzw. Nietverbindung entsteht durch die Schraube bzw. Niet, dem als Metallplatte ausgeführten Gehäuseboden 43 und dem Fluidblock 70 ein durchgehender metallischer Schraubverband, der eine hohe Vorspannung erlaubt und keinen Relaxationserscheinungen des Kunststoffs unterliegt. Im Vergleich zu einer vollständigen Kunststoffwanne kann hier in vorteilhafter Weise auf zusätzliche Schraubbuchsen verzichtet werden. Durch Umspritzen des als Metallplatte ausgeführten Gehäusebodens 43 entsteht im Randbereich 43.1 eine im Kunststoff ausgeformte Dichtnut, in der eine Dichtung 48 bauraumneutral angeordnet ist. Wie weiter aus Fig. 9 ersichtlich ist, ist der als Metallplatte ausgeführte Gehäuseboden 43 im Randbereich 43.1 durch Abprägen in der Dicke reduziert

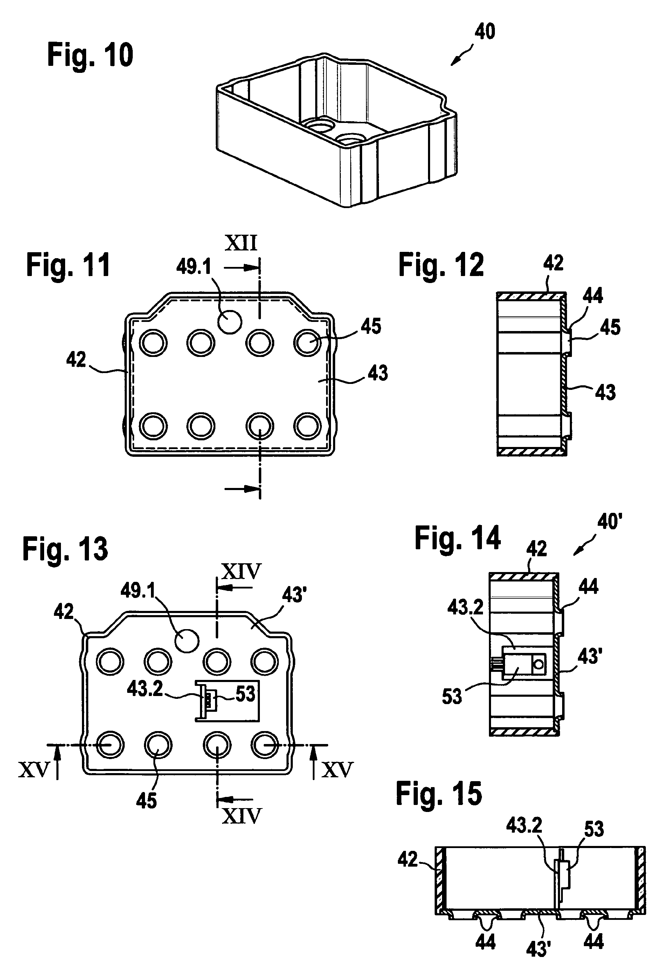

Fig. 10 bis 12 zeigen verschiedene Darstellung einer Ausführungsform der Gehäusewanne 40. Wie aus Fig. 10 bis 12 ersichtlich ist, sind im Gehäuseboden 43 acht Durchsteckbereiche 45 für Ventilpatronen und entsprechende Auskragungen 44 und eine Befestigungsbohrung 49.1 eingebracht.

Fig. 13 bis 15 zeigen verschiedene Darstellung einer weiteren Ausführungsform der Gehäusewanne 40'. Wie aus Fig. 13 bis 15 ersichtlich ist, sind im Gehäuseboden 43' analog zur Ausführungsform gemäß Fig. 10 bis 12 ebenfalls acht Durchsteckbereiche 45 für Ventilpatronen und entsprechende Auskragungen 44 und eine Befestigungsbohrung 49.1 eingebracht. Zusätzlich weist der Gehäuseboden 43' an einer vorgegebenen Stelle eine hochgebogene Kühllasche 43.2 auf, an der ein elektronisches Bauelement 53 befestigt ist und die einen thermisch leitenden Pfad zum Ableiten der in dem elektronischen Bauelement 53 entstehenden Wärme zum Fluidblock 70 ausbildet.

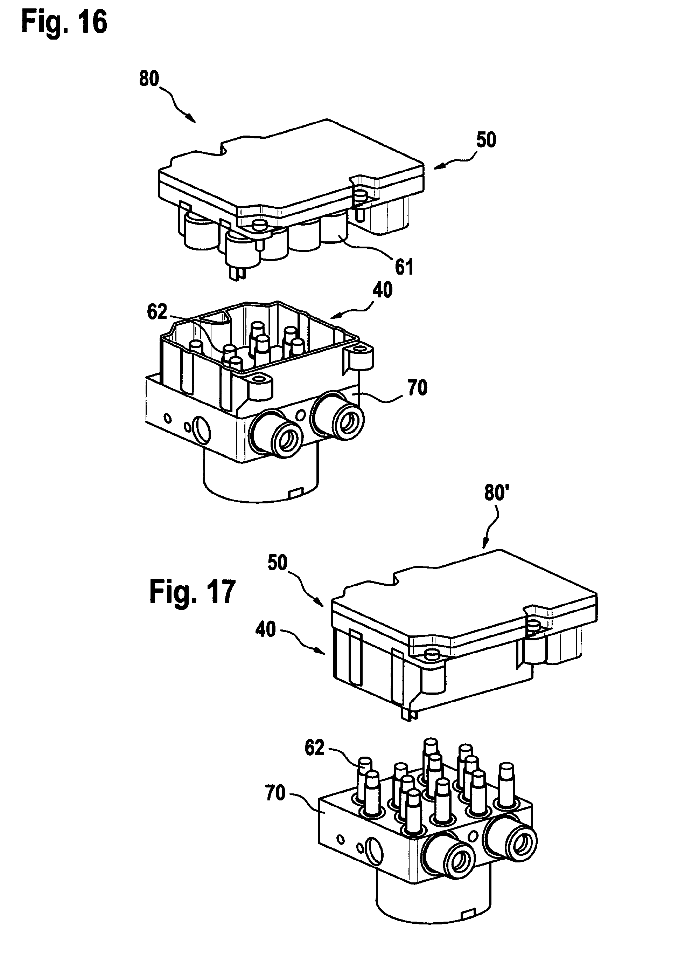

Fig. 16 zeigt eine perspektivische Darstellung von wesentlichen Komponenten eines Fluidaggregats mit einer ersten Trennebene, die zwischen der Gehäusewanne 40 und dem Steuergerät 50 verläuft. Das bedeutet, dass das Steuergerät 50 mit den Magnetbaugruppen 61 von der Gehäusewanne 40 abgenommen werden kann, die mit dem Fluidblock 70 und den Ventilpatronen 62 verbunden ist.

Fig. 17 zeigt eine perspektivische Darstellung von wesentlichen Komponenten eines Fluidaggregats mit einer zweiten Trennebene, die zwischen der Gehäusewanne 40 und dem Fluidblock 70 verläuft. Das bedeutet, dass das Steuergerät 50 mit den Magnetbaugruppen 61 und der Gehäusewanne 40 vom Fluidblock 70 und den Ventilpatronen 62 abgenommen werden kann. Die verschiedenen möglichen Trennebenen ermöglichen einen flexiblen Aufbau des Fluidaggregats 80, wobei die Trennebenen in vorteilhafter Weise an die vorliegenden Einbaubedingungen angepasst werden können.

Das erfindungsgemäße Fluidaggregat mit der Gehäusewanne und dem funktionsintegrierten Gehäuseboden reduziert in vorteilhafter Weise die Gesamtbauhöhe und die Gesamtbaubreite, wobei die optimalen Befestigungsmöglichkeiten der Ventilpatronen bestehen bleiben und die Schnittstelle zwischen Fluidblock und Steuergerät gut abgedichtet ist. Zudem erhöht der funktionsintegrierte Gehäuseboden in vorteilhafter Weise die Steifigkeit des Steuergerätegehäuses und kann Bohrungen zur Montage des Steuergerätes auf den Fluidblock zur Verfügung stellen. Ein weiterer Vorteil besteht darin, dass durch selektive Durchbrüche im erfindungsgemäßen Gehäuseboden eine Kombination von herkömmlichen Magnetventilen, d.h. Magnetventile die Magnetbaugruppen mit eingepressten Abdeckscheiben aufweisen, und den neuen hier beschriebenen Magnetventilen möglich ist, bei denen der erfindungsgemäße Gehäuseboden die Funktion der Abdeckscheibe übernimmt.

## Patentansprüche

1. Fluidaggregat mit einem Fluidblock (70), einem Steuergerät (50) und mindestens einem Magnetventil (60), das eine im Fluidblock (70) angeordnete Ventilpatrone (62) und eine korrespondierende im Steuergerät (50) angeordnete Magnetbaugruppe (61) umfasst, wobei das Steuergerät (50) über eine Gehäusewanne (40) dichtend mit dem Fluidblock (70) verbunden ist, wobei die Gehäusewanne (40) einen funktionsintegrierten Gehäuseboden (43, 43') aufweist, der in einen Magnetkreis (46) des mindestens einen Magnetventils (60) eingebunden ist und wenigstens im Durchsteckbereich (45) des mindestens einen Magnetventils (60) aus einem magnetisch leitfähigen Material, vorzugsweise einem Metall, gebildet ist, **dadurch gekennzeichnet, dass** der funktionsintegrierte Gehäuseboden (43, 43') im Durchsteckbereich (45) des mindestens einen Magnetventils (60) nach oben und/oder unten weisende Auskragungen (44) aufweist.

2. Fluidaggregat nach Anspruch 1, **dadurch gekennzeichnet, dass** der gesamte Gehäuseboden (43, 43') und/oder die gesamte Gehäusewanne (40, 40') aus dem magnetisch leitenden Material, vorzugsweise einem Metall, aufgebaut ist.

3. Fluidaggregat nach Anspruch 1 oder 2, **gekennzeichnet durch** elastische Elemente (47), die zwischen der Magnetbaugruppe (61) und einer Abdeckung (41.1) angeordnet sind und die Magnetbaugruppe (61) dauerhaft gegen den Gehäuseboden (43, 43') drücken.

4. Fluidaggregat nach einem der Ansprüche 1 bis 3, **dadurch gekennzeichnet, dass** die Gehäusewanne (40) durch Schrauben und/oder Kleben und/oder Nieten mit dem Fluidblock (70) verbunden ist.

5. Fluidaggregat nach Anspruch 4, **dadurch gekennzeichnet, dass** der Gehäuseboden (43, 43') im Bereich einer Befestigungsbohrung (49.1) für eine Schraub- und/oder Nietverbindung aus Metall gefertigt ist, um eine hohe Vorspannung zu ermöglichen.

6. Fluidaggregat nach einem der Ansprüche 1 bis 5, **dadurch gekennzeichnet, dass** ein aus Metall gefertigter Gehäuseboden (43, 43') im Randbereich (43.1) mit Kunststoff umspritzt ist, wobei eine Dichtnut im Bereich der Kunststoffumspritzung (42.1) ausgeformt ist.

7. Fluidaggregat nach einem der Ansprüche 1 bis 6, **dadurch gekennzeichnet, dass** zur Aufnahme einer Dichtung (48) die Dicke des Gehäusebodens (43) im Randbereich (43.1) reduziert ist und/oder der Gehäuseboden (43) im Randbereich hochgebogen ist.

8. Fluidaggregat nach einem der Ansprüche 1 bis 7, **dadurch gekennzeichnet, dass** ein Trennebene zwischen dem Fluidblock (70) und dem Steuergerät (50) zwischen dem Fluidblock (70) und der Gehäusewanne (40) oder zwischen der Gehäusewanne (40) und dem Steuergerät (50) verläuft.

9. Fluidaggregat nach einem der Ansprüche 1 bis 8, **dadurch gekennzeichnet, dass** der Gehäuseboden (43') an mindestens einer vorgegebenen Stelle eine hochgebogene Kühllasche (43.2) aufweist, um einen thermisch leitenden Pfad für ein elektronisches Bauelement (53) auszubilden.

## Claims

1. Fluid assembly having a fluid block (70), a control unit (50) and at least one solenoid valve (60) which comprises a valve cartridge (62) which is arranged in the fluid block (70) and a corresponding magnet assembly (61) which is arranged in the control unit (50), the control unit (50) being connected sealingly to the fluid block (70) via a housing trough (40), the housing trough (40) having a functionally integrated housing bottom (43, 43') which is incorporated into a magnetic circuit (46) of the at least one solenoid valve (60) and is formed from a magnetically conductive material, preferably a metal, at least in the plug-through region (45) of the at least one solenoid valve (60), **characterized in that** the functionally integrated housing bottom (43, 43') has upwardly and/or downwardly pointing projections (44) in the plug-through region (45) of the at least one solenoid valve (60).

2. Fluid assembly according to Claim 1, **characterized in that** the entire housing bottom (43, 43') and/or the entire housing trough (40, 40') are/is constructed from the magnetically conducting material, preferably a metal.

3. Fluid assembly according to Claim 1 or 2, **characterized by** elastic elements (47) which are arranged between the magnet assembly (61) and a cover (41.1) and press the magnet assembly (61) permanently against the housing bottom (43, 43').

4. Fluid assembly according to one of Claims 1 to 3, **characterized in that** the housing trough (40) is connected to the fluid block (70) by screwing and/or adhesive bonding and/or riveting.

5. Fluid assembly according to Claim 4, **characterized in that** the housing bottom (43, 43') is produced from metal in the region of a fastening hole (49.1) for a screw and/or rivet connection, in order to make a high prestress possible.

6. Fluid assembly according to one of Claims 1 to 5, **characterized in that** a housing bottom (43, 43') which is produced from metal is encapsulated with plastic in the edge region (43.1), a sealing groove being moulded in the region of the plastic encapsulation (42.1).

7. Fluid assembly according to one of Claims 1 to 6, **characterized in that**, in order to accommodate a seal (48), the thickness of the housing bottom (43) is reduced in the edge region (43.1) and/or the housing bottom (43) is bent upwards in the edge region.

8. Fluid assembly according to one of Claims 1 to 7, **characterized in that** a dividing plane runs between the fluid block (70) and the control unit (50), between the fluid block (70) and the housing trough (40) or between the housing trough (40) and the control unit (50).

9. Fluid assembly according to one of Claims 1 to 8, **characterized in that** the housing bottom (43') has an upwardly bent cooling tab (43.2) at at least one predetermined location, in order to form a thermally conducting path for an electronic component (53).

## Revendications

1. Organe fluidique comprenant un bloc fluidique (70), un appareil de commande (50) et au moins une électrovanne (60) qui comprend une cartouche de soupape (62) disposée dans le bloc fluidique (70) et un module magnétique correspondant (61) disposé dans l'appareil de commande (50), l'appareil de commande (50) étant connecté de manière hermétique au bloc fluidique (70) par le biais d'une cuve de boîtier (40), la cuve de boîtier (40) présentant un fond de boîtier (43, 43') à fonctions intégrées, qui est incorporé dans un circuit magnétique (46) de l'au moins une électrovanne (60) et qui est formé au moins dans la région d'enfichage traversant (45) de l'au moins une électrovanne (60) d'un matériau magnétiquement conducteur, de préférence d'un métal, **caractérisé en ce que** le fond de boîtier (43, 43') à fonctions intégrées présente, dans la région d'enfichage traversant (45) de l'au moins une électrovanne (60), des parties en saillie (44) orientées vers le haut et/ou vers le bas.

2. Organe fluidique selon la revendication 1, **caractérisé en ce que** l'ensemble du fond de boîtier (43, 43') et/ou l'ensemble de la cuve de boîtier (40, 40') est constitué du matériau magnétiquement conducteur, de préférence d'un métal.

3. Organe fluidique selon la revendication 1 ou 2, **caractérisé par** des éléments élastiques (47) qui sont disposés entre le module magnétique (61) et un recouvrement (41.1), et qui pressent le module magnétique (61) durablement contre le fond de boîtier (43, 43').

4. Organe fluidique selon l'une quelconque des revendications 1 à 3, **caractérisé en ce que** la cuve de boîtier (40) est connectée par vissage et/ou collage et/ou rivetage au bloc fluidique (70).

5. Organe fluidique selon la revendication 4, **caractérisé en ce que** le fond de boîtier (43, 43') est fabriqué en métal dans la région d'un alésage de fixation (49.1) pour une connexion par vissage et/ou rivetage, afin de permettre une grande précontrainte.

6. Organe fluidique selon l'une quelconque des revendications 1 à 5, **caractérisé en ce qu'**un fond de boîtier (43, 43') fabriqué en métal est surmoulé dans la région des bords (43.1) avec du plastique, une rainure d'étanchéité étant façonnée dans la région du surmoulage en plastique (42.1).

7. Organe fluidique selon l'une quelconque des revendications 1 à 6, **caractérisé en ce que** pour recevoir un joint d'étanchéité (48), l'épaisseur du fond de boîtier (43) dans la région des bords (43.1) est réduite et/ou le fond de boîtier (43) est recourbé vers le haut dans la région des bords.

8. Organe fluidique selon l'une quelconque des revendications 1 à 7, **caractérisé en ce qu'**un plan de séparation s'étend entre le bloc fluidique (70) et l'appareil de commande (50), entre le bloc fluidique (70) et la cuve de boîtier (40), ou entre la cuve de boîtier (40) et l'appareil de commande (50).

9. Organe fluidique selon l'une quelconque des revendications 1 à 8, **caractérisé en ce que** le fond de boîtier (43') présente en au moins un emplacement prédéterminé une patte de refroidissement recourbée vers le haut (43.2) afin de réaliser un chemin thermoconducteur pour un composant électronique (53).
